# EUROPEAN PATENT APPLICATION

(11) **EP 2 919 396 A1**
(43) Date of publication of application: **16.09.2015**
(21) Application number: 14290066.1
(22) Date of filing: 14.03.2014
(51) Int. Cl.: H04B 10/079

(54) **Control device for an optical network and method of operating a control device**

(71) Applicant: ALCATEL LUCENT, 92100 Boulogne-Billancourt (FR)
(72) Inventor: Gebhard, Ulrich, 70435 Stuttgart (DE); Idler, Wilfried, 70435 Stuttgart (DE)
(74) Representative: DREISS Patentanwälte PartG mbB

(57) **Abstract**

The invention relates to a control device (100) for an optical network (1000), wherein said control device (100) is operable to receive at least one quality measure (qm1) characterizing a quality of at least one optical link (10) of said optical network (1000) from an optical receiver (200) connected to said link (10), and to control at least one network element (ne1) of said network (1000) which is operable to amplify and/or attenuate at least one signal (s) associated with said optical link (10) depending on said at least one quality measure (qm1).

## Description

### Field of the invention

The invention relates to a control device for an optical network and to a method of operating such control device. The invention further relates to an optical receiver and to a method of operating such optical receiver. The invention also relates to an optical network.

### Background

Within conventional optical networks, which may comprise optical links having one or more wavelength channels, physical parameters of optical links are calculated at provisioning time with a simulation tool, and the so obtained physical parameters may be used for routing processes and assessing a link budget throughout the lifetime of the optical network. Disadvantageously, these conventionally obtained physical parameters do not reflect a performance degradation of optical links over time.

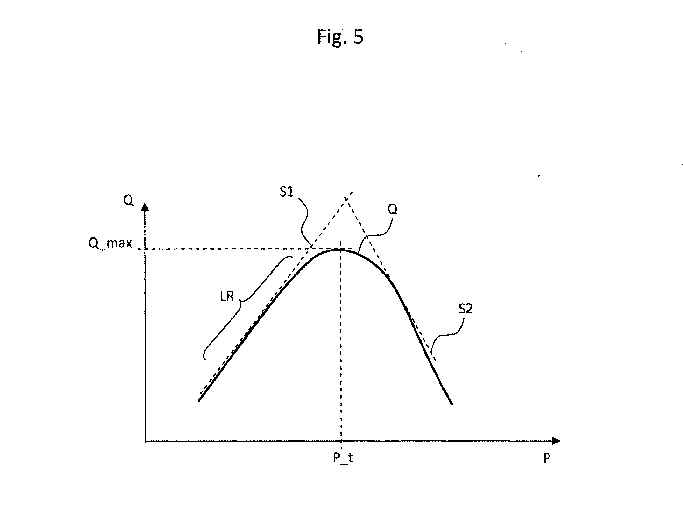

In conventional optical transmission systems, especially wavelength division multiplex (WDM) systems, or networks, respectively, individual wavelength channels are calibrated to an optimum signal quality at the receiver corresponding to a minimum bit error rate (BER) in the receiver for the respective transmission distance and channel impairments. This calibration is done by increasing or decreasing the transmit power level P of the respective wavelength channel and finding a corresponding optimum BER performance according to Fig. 5, using a calculated quality measure Q which reflects the BER associated with the wavelength channel to be calibrated. As can be seen from Fig. 5, increasing the fiber launch power P transforms linearly to an increase of the optical signal-to-noise ratio (OSNR) and improvement of the BER (or Q) at a receiver, given by a typical slope S1 of 1 decade (in BER) per dB (power or OSNR) if operating in the linear transmission regime LR. However, due to nonlinear fiber effects, the performance of the BER (or Q) degrades above a certain threshold power P_t while the OSNR further increases by increasing the launch power P. This nonlinear BER (or Q) degradation is manifested by a slope S2 of 2 decades (in BER) per dB (power or OSNR).

For finding the optimum launch power, the following approach is known in the art: a manual action at the time the wavelength channel is provisioned. Manual adjustment is done by filtering out the interesting wavelength bearer at the receive end, connecting it to a measuring device and changing the launch power P of the sender until the received Q value is at its maximum Q_max (Fig. 5).

Another technique which cannot guarantee calibration of the optical launch power to the optimum Q max, but tries to find a near-optimum operating point, is based on static values which were once calculated at provisioning time and downloaded to the network elements using a planning tool built into or cooperating with the network management system (NMS). This planning tool uses analytical formula to compute the target values. They are based on channel margin calculations considering the accumulation of linear transmission impairments (OSNR, chromatic dispersion, PMD) and nonlinear transmission impairments (single and multichannel nonlinear effects, depending on the bitrate, modulation format and fiber type) along the path. To summarize, the conventional approaches are complex and/or suboptimal and lack operational flexibility.

### Summary

In view of this, it is an object of the present invention to provide an improved control device, an improved method of operating a control device, an improved optical receiver, an improved method of operating such optical receiver and an improved optical network which avoid the abovementioned disadvantages.

According to the present invention, regarding the control device, this object is achieved by said control device being operable to receive at least one quality measure characterizing a quality of at least one optical link of said optical network from an optical receiver connected to said link, and to control at least one network element of said network which is operable to influence a power level of at least one signal associated with said optical link depending on said at least one quality measure, whereby an efficient control loop for calibrating e.g. a transmission power of an optical signal transmitted over said optical link is given. According to an embodiment, influencing a power level of said at least one signal associated with said optical link comprises amplifying and/or attenuating said signal. I.e., the principle according to the embodiments enables to automate adjusting of an optical transmit power of an optical signal by implementing a control loop between at least one receiver receiving said signal and a network element that is capable of influencing at least an amplitude of said signal.

According to an embodiment, the control device may be a central, dedicated entity of the optical network, or may form part of a network management system. According to a further embodiment, the control device may be integrated into one or more optical network elements of said optical network or any other components of the optical network. According to a further embodiment, the functionality of the control device may also be distributed over one or more of the aforementioned entities of the optical network.

According to a further embodiment, said at least one network element is a controllable optical amplifier ("COA") which is operable to amplify and/or attenuate optical signals of one or more wavelength channels of said optical link. Thus, a transmit power control loop enabled by the embodiments may comprise single wavelength channels of an optical link or a plurality of wavelength channels, or all wavelength channels of said link.

According to an embodiment, said COA may comprise a combination of an optical amplifier (OA) and a variable optical attenuator (VOA). Thus, by controlling said OA and/or said VOA, a predetermined amplification and/or attenuation may be applied to optical signals.

According to an embodiment, a COA may comprise an optical amplifier which is not controllable, i.e. effects a constant amplification or gain of an optical signal. In this case, an overall gain/attenuation effected by said COA may be attained by correspondingly controlling the VOA.

According to a further embodiment, a COA in the sense of the present description may also only comprise an optical amplifier (OA), preferably a controllable OA.

According to yet a further embodiment, a COA in the sense of the present description may also only comprise an optical attenuator. According to a further embodiment, said at least one network element which is operable to amplify and/or attenuate at least one signal associated with said optical link under control of the control device may also comprise a transmitter unit of an optical transmitter. In this case, the control loop can directly affect a generation of optical signals from which the quality measure qm1 is derived.

Generally, an optical link in the sense of the present application may comprise one or more spans of optical fiber, wherein between two spans of fiber one or more network entities such as e.g. amplifiers, optical transmitter and/or receiver nodes and the like may be arranged.

According to a further embodiment, said quality measure characterizes a quality of one or more wavelength channels of said optical link.

According to a further embodiment, said control device is operable to receive said at least one quality measure over a control channel of the optical network, wherein said quality measure is preferably encapsulated in Internet Protocol, IP, packets. Thus, existing control channel mechanisms may be extended by the functionality according to the embodiments, and no separate, further signaling paths are required for implementing a control loop according to the embodiments.

According to an embodiment, said at least one quality measure characterizing a quality of at least one optical link may be derived from or determined depending on a quality of said least one signal associated with said optical link.

According to a further embodiment, said quality measure represents a bit error rate, BER, of a signal received by said optical receiver via said link, preferably a bit error rate prior to a forward error correcting stage of said receiver ("pre-FEC BER"). For example, according to a further embodiment, said quality measure may also represent a parameter characterizing chromatic dispersion, a parameter characterizing a signal to noise ratio, SNR, a parameter characterizing a number of bit errors prior to a forward error correction, FEC, stage ("pre-FEC BER") of said optical receiver or any combination thereof. According to a further embodiment, said control device is operable to periodically and/or dynamically determine target values for an attenuation and/or amplification of at least one optical signal associated with said optical link at said least one network element depending on said at least one quality measure, whereby a dynamic calibration of the transmission power used within said link is enabled. Thus, advantageously, aging effects (deterioration of fiber spans, optical amplifiers, and the like) as well as nonlinear effects resulting from e.g. changing power distributions within different wavelength channels of a same optical fiber may be compensated, and an overall optimum quality adjustment for the optical link may be attained.

A further solution to the object of the present invention is provided by an optical receiver operable to receive an optical signal from at least one optical link, wherein said optical receiver is operable to determine at least one quality measure characterizing a quality of said optical link, and to transmit said at least one quality measure and/or information derived from said at least one quality measure to a further device, particularly to a control device according to one of the preceding claims. Preferably, more than one receiver is provided within an optical network to enable a broad or network-wide gathering of quality data related to optical links of said network.

According to a further embodiment, said receiver is operable to determine a quality measure for at least one wavelength channel terminated by said receiver, preferably for all wavelength channels terminated by said receiver. When determining a quality measure for an individual wavelength channel, a transmission power of an optical signal transmitted via said individual wavelength channel may advantageously be altered, e.g. to optimize said quality measure for said individual wavelength channel. Alternatively or in addition, quality measures for further wavelength channels may also be determined and forwarded likewise, whereby a control loop for adapting a respective optical transmission power related to said further wavelength channels may be provided. This is particularly advantageous since it enables to account for non-linear effects depending e.g. on a sum transmission power of various optical signals transmitted through a same optical fiber on different WDM channels. In other words, not only a specific WDM channel may be optimized regarding its transmission power, independently of other WDM channels, but a "global" optimization of transmission powers of several WDM channels of a same optical fiber or a coordinated optimization of several or all WDM channels of the optical network is enabled which allows to efficiently cope for undesired nonlinear effects on shared fibers and to perform a network-wide arbitration of power levels of different channels sharing common path segments.

According to a further embodiment, said receiver is operable to encapsulate said quality measure(s) into at least one Internet Protocol, IP, packet.

A further solution to the object of the present invention is provided by an optical network comprising at least one control device according to the embodiments and/or at least one optical receiver according to the embodiments.

A further solution to the object of the present invention is provided by a method of operating a control device for an optical network, wherein said control device is operable to receive at least one quality measure characterizing a quality of at least one optical link of said optical network from an optical receiver connected to said link, wherein said control device controls at least one network element of said network which is operable to influence a power level of at least one signal associated with said optical link depending on said at least one quality measure.

According to a further embodiment, said step of controlling comprises controlling a controllable optical amplifier (COA, cf. above for the definition), to amplify and/or attenuate optical signals of one or more wavelength channels of said optical link.

According to a further embodiment, said control device periodically and/or dynamically determines target values for an attenuation and/or amplification of at least one optical signal associated with said optical link at said least one network element depending on said at least one quality measure.

According to a further embodiment, said optical receiver is operable to receive an optical signal from at least one optical link, wherein said optical receiver determines at least one quality measure characterizing a quality of said optical link, and transmits said at least one quality measure and/or information derived from said at least one quality measure to a further device, particularly to a control device according to the embodiments.

According to a further embodiment, said optical receiver determines a quality measure for at least one wavelength channel terminated by said receiver, preferably for all wavelength channels terminated by said receiver, and/or encapsulates said quality measure(s) into at least one Internet Protocol, IP, packet.

### Brief description of the figures

Further features, aspects and advantages of the present invention are given in the following detailed description with reference to the drawings in which:
- Figure 1: schematically depicts an optical network according to an embodiment,
- Figure 2a: schematically depicts a flow-chart of a method according to an embodiment,
- Figure 2b: schematically depicts a flow-chart of a further method according to an embodiment,
- Figure 3: schematically depicts an optical network according to a further embodiment,
- Figure 4: schematically depicts a portion of the optical network of Figure 3, and
- Figure 5: schematically depicts a quality measure over an optical transmit power.

### Description of the embodiments

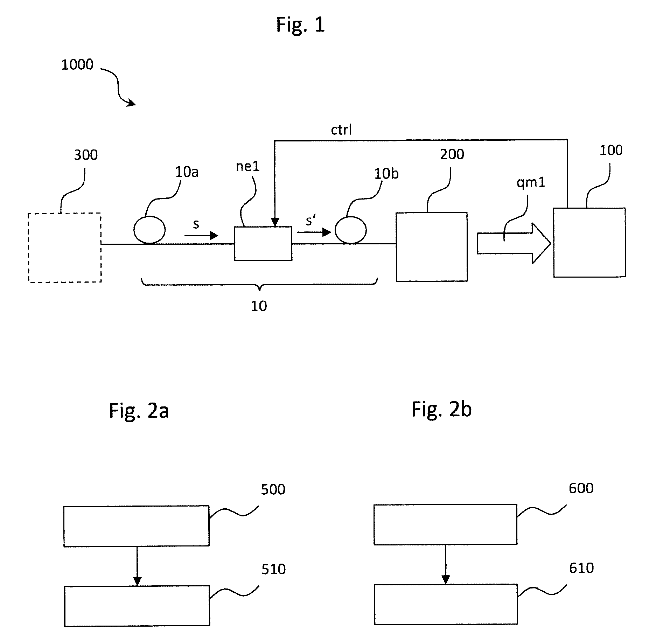

Figure 1 schematically depicts an optical network 1000 according to an embodiment. The optical network 1000 comprises an optical receiver 200 which is operable to receive an optical signal s' from at least one optical link 10 of the network 1000. Presently, the link 10 comprises a first fiber span 10a and a second fiber span 10b and a controllable optical amplifier (COA) ne1, which is operable to apply a predetermined attenuation and/or amplification to at least one optical signal traveling through the link 10.

According to an embodiment, said COA ne1 may comprise a combination of an optical amplifier (OA) and a variable optical attenuator (VOA). Thus, by controlling said OA and/or said VOA, a predetermined amplification and/or attenuation may be applied to optical signals.

According to an embodiment, a COA may comprise an optical amplifier which is not controllable, i.e. effects a constant amplification or gain of an optical signal. In this case, an overall gain/attenuation effected by said COA may be attained by correspondingly controlling the VOA.

According to a further embodiment, a COA in the sense of the present description may also only comprise an optical amplifier (OA), preferably a controllable OA.

According to yet a further embodiment, a COA in the sense of the present description may also only comprise an optical attenuator.

A further network element 300, which comprises an optical transmitter (not shown), is connected to the first fiber span 10a, so that an optical signal s may be transmitted from the further network element 300 via said link 10 to the receiver 200. As mentioned above, the COA ne1 may e.g. attenuate or amplify at least one component of the optical signal s, whereby the modified signal s' is received at an output of the COA ne1 for further transmission to the receiver 200.

According to the embodiments, said optical receiver 200 is operable to determine at least one quality measure qm1 characterizing a quality of said optical link 10, and to transmit said at least one quality measure qm1 and/or information derived from said at least one quality measure qm1 to a further device 100.

The control device 100 is operable to receive said at least one quality measure qm1 from the optical receiver 200, and to control at least one network element of said network 1000, which is operable to amplify and/or attenuate at least one signal s associated with said optical link 10 depending on said at least one quality measure qm1. Presently, the control device 100 is operable to control the COA ne1, cf. the arrow ctrl, depending on said at least one quality measure qm1. Thus, a control loop may be provided comprising the elements ne1, 200, 100, wherein said control loop enables to tune an attenuation or amplification of said optical signal s, e.g. in order to increase the quality measure qm1. Specifically, said control loop may be used for finding and attaining the optimum value Q_max of the quality measure as depicted by Fig. 5 and already explained above.

The control loop ne1, 200, 100, advantageously enables to dynamically, i.e. during an operation of the optical network 1000, possibly throughout the complete lifetime of the optical network 1000, calibrate a transmission power of the signal s or s', respectively, on the fiber span 10b of the link 10 thus enabling to address deterioration of the fiber span 10b and/or the COA ne1 and further undesired effects influencing the quality measure qm1.

According to an embodiment, said quality measure qm1 characterizes a quality of one or more wavelength channels of said optical link 10. E.g., if the signal s is assumed to represent a single wavelength channel, i.e. a WDM channel, the control loop ne1, 200, 100 enables to calibrate optical transmission within said link 10 at least regarding said single wavelength channel.

According to an embodiment, said control device 100 is operable to receive said at least one quality measure qm1 over a control channel of the optical network 1000, wherein said quality measure qm1 is preferably encapsulated in Internet Protocol, IP, packets. Thus, an existing control plane infrastructure of the network 1000 may be used for closing the control loop.

According to an embodiment, said quality measure qm1 represents a bit error rate, BER, of a signal received by said optical receiver 200 via said link 10, preferably a bit error rate prior to a forward error correcting stage of said receiver 200.

According to an embodiment, said control device 100 is operable to periodically and/or dynamically determine target values for an attenuation and/or amplification of said optical signal s at the COA ne1 depending on said at least one quality measure qm1. I.e., the quality measure qm1 may periodically be determined by said receiver 200, forwarded to the control device 100, and the control device 100 may determine new target values for a future control of the COA ne1.

According to an embodiment, the receiver 200 may be a socalled coherent optical receiver, which is able to collect and extract statistics on the quality of received signals s'. For this purpose, according to an embodiment, the receiver 200 may e.g. comprise a calculating unit, e.g. a digital signal processor (DSP), which reports a bit error rate (BER) prior to a Forward-Error-Correction (FEC) stage of the receiver, wherein this pre-FEC BER may e.g. be used as said quality measure qm1 or for determining said quality measure qm1.

According to a further embodiment, the receiver 200 may also be a non-coherent optical receiver, which, however, is also able to determine/extract e.g. statistics about the quality of the received signal s', which may serve as the quality measure qm1.

Fig. 2a depicts a simplified flow-chart of a method of operating the receiver 200 according to an embodiment. In step 500, the receiver 200 receives the optical signal s' (Fig. 1) from said optical link 10 and determines said at least one quality measure qm1 characterizing a quality of said optical link 10. In step 510, the receiver 200 transmits said at least one quality measure qm1 and/or information derived from said at least one quality measure qm1 to a further device 100, particularly to the control device 100 according to the embodiments.

Fig. 2b depicts a simplified flow-chart of a method of operating the control device 100 according to an embodiment. In step 600, the control device 100 receives at least one quality measure qm1 characterizing a quality of at least one optical link 10 of said optical network 1000 from the optical receiver 200. In step 610, the control device 100 controls (cf. the arrow ctrl in Fig. 1) at least one network element ne1 of said network 1000 which is operable to amplify and/or attenuate at least one signal s associated with said optical link 10 depending on said at least one quality measure qm1.

According to a further embodiment, in step 600, quality measures of a plurality of devices may be received, wherein said quality measures are e.g. related to different wavelength channels of a same optical link and/or of different optical links and/or any combination thereof. According to said further embodiment, in step 610, the control device 100 may correspondingly determine a plurality of different control signals for a plurality of COAs ne1 (Fig. 1) or transmitter devices 300 of said network depending on said plurality of quality measures. According to an embodiment, thus, a "global" arbitration or optimization, may be performed.

Advantageously, the principle according to the embodiments can make use of a connection between a network management system (NMS) of the optical network 1000 (Fig. 1) and the WDM nodes such as e.g. receiver 200 and the control device 100 to report receive power levels and/or said quality measure qm1 or any combination thereof from the receiver 200 to e.g. a central entity such as e.g. an orchestration or equalization module built into or cooperating with the NMS. According to an embodiment, the control device 100 may be a central, dedicated entity of the optical network 1000, as exemplarily depicted by Fig. 1, or may form part of a network management system NMS (not shown). According to a further embodiment, the control device 100 may be integrated into one or more optical network elements 200, 300 of said optical network 1000 or any other components ne1 of the optical network 1000. According to a further embodiment, the functionality of the control device 100 may also be distributed over one or more of the aforementioned entities of the optical network 1000.

Advantageously, according to an embodiment, a control plane of state-of-the-art WDM systems may be used to implement the principle according to the embodiments. For example, a WDM system may comprise a control plane via which information about network topology and wavelength reservation and the like may autonomously be exchanged between elements of the WDM network. Likewise, information about network topology and wavelength reservation may be collected via said control plane. According to an embodiment, this information may be stored in form of one or more data bases, from which the system 1000 or a control device 100 may derive knowledge about endpoints (i.e. sender nodes 300 and receiver nodes 200) of a particular wavelength path (also denoted as "lambda path"), and the (IP) addresses of the respective nodes 200, 300, and also how to reach the NMS or the control device.

According to an embodiment, the control plane uses a special wavelength channel (e.g., optical supervisory channel, OSC) carrying information about all lambda paths in a fiber 10a, 10b (Fig. 1) which is terminated by a control plane entity in every node 200 where information can be processed and forwarded to other nodes, to the local management entity and to the NMS and/or the control device.

Via this control channel, receivers can also give the control device feedback about the quality measures qm1 as determined according to the principle of the embodiments such that the control device can recalculate - depending on certain thresholds - network-wide target values for the optical power and download them to the WDM nodes 300 (Fig. 1) and/or COAs ne1 and the like to trigger local control loops 300, 200, 100; ne1, 200, 100 (Fig. 1) and e.g. change a launch power (optical transmit power) where appropriate. According to an embodiment, the control channel uses bit rates much lower than the data bearers and can therefore be deployed using modulation formats which are robust to optical impairments.

When implementing the principle according to the embodiments, e.g. the control device may be provided with a real-time view of optical signal power levels in one or more receivers 200 of the network 1000 allowing power-level computation algorithms in the control device to compute target values which are much better adapted to the life network 1000 than conventionally defined static target values, which particularly cannot account for gradual changes within the network 1000 and dynamic effects. According to an embodiment, one or more feedback loops of the type above explained with reference to the components ne1, 300, 200, 100 (Fig. 1) can be active all the time, not only at provisioning time of the network 1000, such that target values can be dynamically adapted following changes in the network conditions which is not possible with the existing solutions.

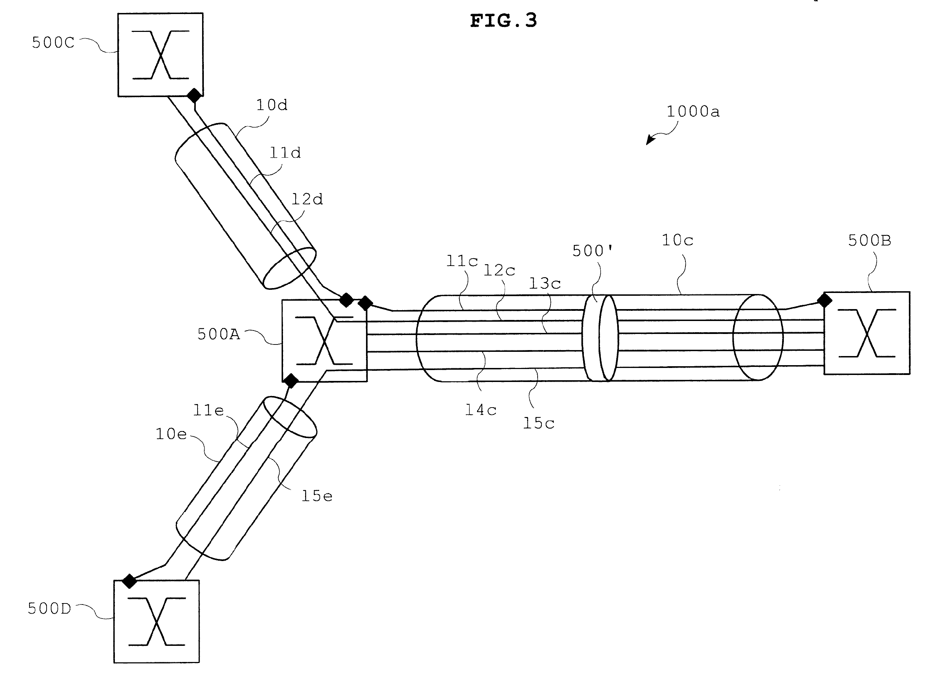

Fig. 3 schematically depicts an optical network 1000a according to a further embodiment. The network 1000a comprises four network elements or nodes 500A, 500B, 500C, 500D which are connected with each other as depicted by Fig. 3 by means of respective optical fibers 10c, 10d, 10e. Presently, five wavelength channels 11c, 12c, 13c, 14c 15c are provided within the optical fiber 10c connecting nodes 500A, 500B, two wavelength channels 11d, 12d are provided within the optical fiber 10d connecting nodes 500A, 500C, and two wavelength channels 11e, 15e are provided within the optical fiber 10e connecting nodes 500D, 500A. Additionally, an amplifier 500', e.g. of the EDFA type, is provided as depicted by Fig. 3. More specifically, EDFA 500' is capable of applying a predetermined amplification to the entire waveband comprising e.g. the wavelength channels 11c, 12c, 13c, 14c 15c. Note that in real systems, a larger number of wavelength channels may be present.

According to an embodiment, the node 500B may comprise the functionality of the optical receiver 200 (Fig. 1) as explained above, i.e. to determine a quality measure qm1 of a link or optical signal received via said link, and to forward said quality measure qm1 to a control device (not shown in Fig. 3). According to an example, in the network 1000a, the control device functionality may be provided in any of the depicted nodes 500A to 500D, but may also be provided in an external node or the NMS (not shown).

According to an embodiment, the control device functionality of the network 1000a of Fig. 3 may be operable to control the EDFA 500' depending on said quality measure qm1 received from the node 500B thus enabling a closed-loop optimization process to find the optimum amplifier gain which achieves the best signal quality (I.e., quality measure value) at the receiver , also cf. Fig. 5.

According to an embodiment, a supervisory channel or control channel, may be provided by means of said wavelength channels 11c, 11d, 11e as depicted by Fig. 3. Thus, e.g. the quality measure qm1 as determined by node 500B may be transmitted to further nodes and/or the control device functionality of said network 1000a without requiring an external signaling path.

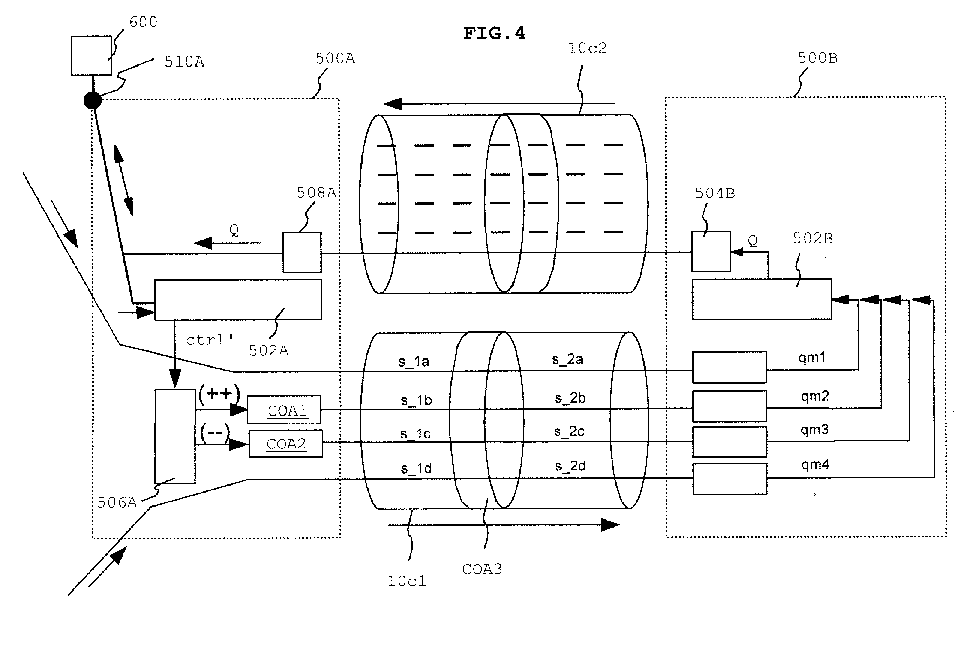

Figure 4 schematically depicts a portion of the optical network 1000a of Figure 3. The nodes 500A, 500B as already explained above with reference to Fig. 3 are connected by two optical fiber segments 10c1, 10c2, which have opposite transmit directions as symbolized by the arrows. According to the present embodiment, segment 10c1 is used for transmissions from node 500A to node 500B, and segment 10c2 is used for transmissions from node 500B to node 500A.

Although according to the present example, nodes 500A, 500B are neighbors according to the topology of network 1000a of Fig. 3, the same principle as explained below with reference to Fig. 4 applies for any pair of upstream and downstream nodes, even if they are connected by an optical link comprising more than one hop (i.e., intermediate optical network elements between said two nodes).

According to the present example, four optical signals reach node 500B via node 500A on individual wavelength channels. Two of them, s_1b and s_1c are transmitted from node 500A while two others originate in upstream nodes not shown in Fig. 4 and only pass through node 500A, namely s_1a and s_1d. They correspond, for example, to wavelength channels 12c, 13c. An optical amplifier COA3, which may correspond to EDFA 500' of Fig. 3, is provided in the path of fiber segment 10c1, for intermediate amplification of the waveband comprising optical signals s_1a, s_1b,.., whereby the amplified signals s2a, s_2b,... are obtained, which proceed to the receiving node 500B.

In addition to the element COA3 of the fiber segment 10c1, the transmitting node 500A comprises two optical transmitters whose gain is controlled by two COAs COA1, COA2, wherein COA1 determines the power level of the signal s_1b transmitted on wavelength channel 13c, and wherein COA2 determines the power level of the optical signal s_1c transmitted via wavelength channel 14c. The COAs COA1, COA2 may e.g. be controlled by an adjustment control unit 506A, which is local to the node 500A, depending on an external control signal ctrl'.

In accordance with the principle according to the embodiments, the node 500B receives the four optical signals s_2a, s_2b, s_2c, s_2d and calculates, preferably for each of them, an individual quality measure qm1, qm2, qm3, qm4, which is internally processed by a control entity 502B. According to an embodiment, said control entity 502B forwards said quality measures qm1, qm2, qm3, qm4 to a control transmitter unit 504B, which transmits a signal Q, that represents said quality measures qm1, qm2, qm3, qm4, over a control channel (dedicated wavelength channel, similar to WDM channel 11c of Figure 3), to node 500A. According to a preferred embodiment, said signal Q comprises Internet Protocol data packets that are used for encapsulating said quality measures qm1, qm2, qm3, qm4.

Upon receipt at a control receiver unit 508A, signal Q is forwarded to a control or management entity 600. The control or management entity 600 derives from said signal Q a control signal ctrl', which is provided to the adjustment control unit 506A, that controls the COAs COA1, COA2 depending on said control signal ctrl', via a local control agent 502A. Presently, COA1 is controlled to increase an amplification of optical signal s_1b, and COA2 is controlled to decrease an amplification of optical signal s_1c, which has an effect on the quality measures qm2, qm3 determined by receiving node 500B.

Thus, two control loops comprising the components COA1, 10c1, 500B, qm2, 10c2, 500A, 600 and COA2, 10c1, 500B, qm3, 10c2, 500A, 600 have been exemplarily explained with reference to Figure 4 which enable to dynamically optimize an optical signal transmission in the optical fiber segment 10c1 between the nodes 500A, 500B.

According to the present embodiment, the functionality of the control device 100 (Fig. 1) according to the embodiments is located in node 500A because it receives the quality measures qm1, .., qm4 from the receiving node 500B and controls the COAs COA1, COA2.

According to further embodiments, the functionality of the control device 100 may also be located in a further external device 100 as depicted by the scenario of Fig. 1, e.g. in a portion of a network management system. According to a further embodiment, the node 500A may also comprise a management connection port 510A, which represents an interface to a NMS 600 or a control device for the optical network 1000a (Figure 3).

Although the above explanations with reference to Figure 4 deal with a data transmission direction from node 500A to node 500B, the inverse direction of data transmission, e.g. from node 500B to node 500A, may also be employed for establishing at least one control loop. In this case, the receiver section (not shown) of node 500A could provide quality measures for optical signals received from the node 500B via the fiber segment 10c2, and forward these quality measures to any entity comprising control device 100 functionality, e.g. located in the node 500B, the NMS 600, or any other suitable entity of the optical network 1000a.

As already mentioned above, according to an embodiment, feedback information comprising the quality measures is encapsulated in IP packets and may e.g. contain the BER (especially, pre-FEC BER) value, preferably for every lambda path terminated by the respective receiver.

According to a further embodiment, a feedback loop may mainly be intended to control a transmit power level of a sending transponder (optical transmitter, cf. e.g. item 300 of Figure 1, which may preferably comprise a COA), but the reported quality measure of a receiver 200 can also be used to control a transmit power and/or COAs at other points in the path (e.g. at COA ne1 of Figure 1 and/or for one or more wavelengths or a waveband at intermediate wavelength/waveband routers).

The principle according to the embodiments advantageously enables to dynamically identify an optimum channel transmission power for each wavelength channel of a WDM link. In the course of varying the channel power using the closed-loop scheme ne1, 200, 100 (Fig. 1), slopes S1, S2 (Fig. 5) of the Q/P curve can be identified via which the final optimum channel power can be determined. This way, an improved performance for a transmit power calibration mechanism is attained.

By implementing the principle according to the embodiments, an optimum individual channel performance of optical wavelength channels can be obtained, which allows to exploit the optical channel up to its performance limits to achieve maximum transmission distance.

The principle according to the embodiments advantageously enables to provide information about the life network 1000a, because the quality measures qm1, ... may be periodically determined. Thus, also long-term effects such as aging may be compensated. Also, a control loop according to the principle of the embodiments may be defined between any two optical network nodes (transmitter, receiver) of an optical network, independent of whether the nodes are neighbor nodes or not. For example, in a scenario where an optical link between two optical network nodes comprises several hops, possibly using different wavelength channels per hop, the control loop according to the embodiments may be used for altering signal amplification/attenuation of a single hop and/or wavelength channel thereof, or for altering signal amplification/attenuation of multiple hops or wavelength channels thereof.

Generally, it is beneficial if the functionality of the control device 100 according to the embodiments is located at a central network element such as the NMS 600 (Fig. 4), whereby a global optimization of optical transmit powers within an optical network is enabled.

The principle according to the embodiments is fully independent of applied mixed fiber types, modulation formats and transmission bitrates. The proposed method is better utilizing the system performance as it is not based on margins, but rather on real-time or at least dynamically gathered data qm1. It can calculate more precise target values and hence exploit margins of wavelength channels operating in comfortable receive-power conditions (cf. signal s_1c of Fig. 4) in favor of wavelength channels operating at their performance limits (cf. signal s_1b of Fig. 4) since an amplifier gain of a COA (cf. e.g. COA3 of a fiber 10c1 (Fig. 4)) is shared among all wavelength channels of a fiber. Further advantageously, the principle according to the embodiments enables to adjust (optical transmission) power levels dynamically, not only at provisioning time or by (manual) operator action. It reflects the live-network situation and can also cover effects caused by aging. It provides an improved performance of the calibration mechanism (by using slopes S1, S2, cf. Fig. 5).

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. Control device (100) for an optical network (1000), wherein said control device (100) is operable to receive (600) at least one quality measure (qm1) characterizing a quality of at least one optical link (10) of said optical network (1000) from an optical receiver (200) connected to said link (10), and to control (610) at least one network element (ne1) of said network (1000) which is operable to influence a power level of at least one signal (s) associated with said optical link (10) depending on said at least one quality measure (qm1).

2. Control device (100) according to claim 1, wherein said at least one network element (ne1) is a controllable optical amplifier, which is operable to amplify and/or attenuate optical signals of one or more wavelength channels of said optical link (10).

3. Control device (100) according to one of the preceding claims, wherein said quality measure (qm1) characterizes a quality of one or more wavelength channels of said optical link (10).

4. Control device (100) according to one of the preceding claims, wherein said control device (100) is operable to receive said at least one quality measure (qm1) over a control channel (11c) of the optical network (1000), wherein said quality measure (qm1) is preferably encapsulated in Internet Protocol, IP, packets.

5. Control device (100) according to one of the preceding claims, wherein said quality measure (qm1) represents a bit error rate, BER, of a signal received by said optical receiver (200) via said link (10), preferably a bit error rate prior to a forward error correcting stage of said receiver (200).

6. Control device (100) according to one of the preceding claims, wherein said control device (100) is operable to periodically and/or dynamically determine target values for an attenuation and/or amplification of at least one optical signal associated with said optical link (10) at said least one network element (ne1) depending on said at least one quality measure (qm1).

7. Optical receiver (200) operable to receive an optical signal (s') from at least one optical link (10), wherein said optical receiver (200) is operable to determine (500) at least one quality measure (qm1) characterizing a quality of said optical link (10), and to transmit (510) said at least one quality measure and/or information derived from said at least one quality measure (qm1) to a further device (100), particularly to a control device (100) according to one of the preceding claims.

8. Optical receiver (200) according to claim 7, wherein said receiver (200) is operable to determine a quality measure (qm1, qm2, qm3, qm4) for at least one wavelength channel terminated by said receiver (200), preferably for all wavelength channels terminated by said receiver (200).

9. Optical receiver (200) according to one of the claims 7 to 8, wherein said receiver (200) is operable to encapsulate said quality measure(s) (qm1, qm2, qm3, qm4) into at least one Internet Protocol, IP, packet.

10. Optical network (1000; 1000a) comprising at least one control device (100) according to one of the claims 1 to 6 and/or at least one optical receiver (200) according to one of the claims 7 to 9.

11. Method of operating a control device (100) for an optical network (1000), wherein said control device (100) is operable to receive (600) at least one quality measure (qm1) characterizing a quality of at least one optical link (10) of said optical network (1000) from an optical receiver (200) connected to said link (10), wherein said control device (100) controls (610) at least one network element (ne1) of said network (1000) which is operable to influence a power level of at least one signal (s) associated with said optical link (10) depending on said at least one quality measure (qm1).

12. Method according to claim 11, wherein said step of controlling comprises controlling a controllable optical amplifier to amplify and/or attenuate, optical signals of one or more wavelength channels of said optical link (10).

13. Method according to one of the claims 11 to 12, wherein said control device periodically and/or dynamically determines target values for an attenuation and/or amplification of at least one optical signal associated with said optical link (10) at said least one network element (ne1) depending on said at least one quality measure (qm1).

14. Method of operating an optical receiver (200), wherein said optical receiver (200) is operable to receive an optical signal (s') from at least one optical link (10), wherein said optical receiver (200) determines (500) at least one quality measure (qm1) characterizing a quality of said optical link (10), and transmits (510) said at least one quality measure and/or information derived from said at least one quality measure (qm1) to a further device (100), particularly to a control device (100) according to one of the claims 1 to 6.

15. Method according to claim 14, wherein said optical receiver (200) determines a quality measure (qm1, qm2, qm3, qm4) for at least one wavelength channel terminated by said receiver (200), preferably for all wavelength channels terminated by said receiver (200), and/or encapsulates said quality measure(s) (qm1, qm2, qm3, qm4) into at least one Internet Protocol, IP, packet.
